# EUROPÄISCHE PATENTSCHRIFT

(11) **EP 1 046 041 B1**
(45) Veröffentlichungstag und Bekanntmachung des Hinweises auf die Patenterteilung: **11.04.2007**
(21) Anmeldenummer: 99945928.2
(22) Anmeldetag: 06.07.1999
(51) Int. Cl.: G01P 3/487, H01F 7/02, H02K 1/27, H02K 11/00, F16D 1/08, F16B 21/20

(54) **POLRAD AUS EINEM HOHLEN MAGNETKÖRPER UND EINEM HALTETEIL**
MAGNET WHEEL CONSISTING OF A HOLLOW MAGNET BODY AND A RETAINING ELEMENT
ROUE POLAIRE CONSTITUEE D'UN CORPS MAGNETIQUE CREUX ET D'UN ELEMENT DE RETENUE

(30) Priorität: 12.10.1998 DE 19846918
(43) Veröffentlichungstag der Anmeldung: 25.10.2000
(73) Patentinhaber: ROBERT BOSCH GMBH, 70442 Stuttgart (DE)
(72) Erfinder: HAUSSECKER, Walter, D-77830 Buehlertal (DE); RAECKE, Mathis, D-76131 Karlsruhe (DE); DREIER, Friedrich-Wilhelm, D-76547 Sinzheim (DE); KURZMANN, Rainer, D-77855 Achern (DE)
(86) Internationale Anmeldenummer: PCT/DE1999/002090
(87) Internationale Veröffentlichungsnummer: WO 2000/022442

(56) Entgegenhaltungen:
- US-A- 4 835 505
- US-A- 5 500 994
- US-A- 5 565 721
- PATENT ABSTRACTS OF JAPAN vol. 1997, no. 1, 31. Januar 1997 (1997-01-31) & JP 08 237915 A (FUJI KOKI SEISAKUSHO:KK), 13. September 1996 (1996-09-13)
- PATENT ABSTRACTS OF JAPAN vol. 12, no. 367 (E-664), 30. September 1988 (1988-09-30) & JP 63 119509 A (MATSUSHITA ELECTRIC IND CO LTD), 24. Mai 1988 (1988-05-24)
- PATENT ABSTRACTS OF JAPAN vol. 15, no. 448 (E-1133), 14. November 1991 (1991-11-14) & JP 03 190541 A (KAWASAKI STEEL CORP), 20. August 1991 (1991-08-20)
- PATENT ABSTRACTS OF JAPAN vol. 16, no. 497 (E-1279), 14. Oktober 1992 (1992-10-14) & JP 04 183245 A (MATSUSHITA ELECTRIC IND CO LTD), 30. Juni 1992 (1992-06-30)

## Beschreibung

### Stand der Technik

Die Erfindung geht aus von einem Polrad aus einem hohlen Magnetkörper und einem Halteteil gemäß der Gattung des Patentanspruchs 1.

Durch die Druckschrift EP 0 601 228 B1 ist ein Polrad aus einem ersten Bauteil, das als ein hohler Magnetkörper aus Magnetpulver mit thermoplastischer Bindung hergestellt ist, in Umlaufrichtung wenigstens einen Nordpol und einen Südpol aufweist und eine Welle zug- und druckspannungsfrei umgibt, und aus einem zweiten Bauteil, das ein fest auf der Welle sitzendes Halteteil aus thermoplastischem Werkstoff ist und axial an das erste Bauteil anschließt, und aus formschlüssigen Verbindungsmitteln zur axialen und verdrehsicheren Halterung des hohlen Magnetkörpers am Halteteil bekannt, wobei die formschlüssigen Verbindungsmittel einstückig mit einem der beiden Bauteile ausgebildet sind. Dabei ist das Halteteil dasjenige Bauteil, das einstückig mit den formschlüssig wirkenden Verbindungsmitteln ausgebildet ist, wobei die Verbindungsmittel nach Art von Federzungen ausgebildet sind und je ein hakenartiges Ende haben. In der Praxis sind zwei solcher Verbindungsmittel einander diametral gegenüberliegend angeordnet. Der hohle Magnetkörper weist innen einen lichten Durchmesser auf, derart, daß er die Welle umgibt und dabei frei von Zugspannungen und von Druckspannungen ist. Dies ist erreicht durch Verwendung einer Spielpassung, einem sogenannten Schiebesitz. Vom lichten Durchmesser ausgehend, besitzt der hohle Magnetkörper zwei Längsnuten, durch die hindurch die hakenartigen Enden der Verbindungsmittel bewegt werden beim Zusammenbauen der beiden Bauteile, wonach die hakenartigen Enden stirnseitig neben den hohlen Magnetkörper greifen und die übrigen Zonen der Verbindungsmittel radial nach außen federnd in den Nuten anliegen. Dieserart ist eine in zwei Richtungen wirkende axiale Sicherung zum Halteteil als auch eine Verdrehsicherung relativ zu dem Halteteil erreicht. Erkennbar ist, daß zum Hindurchführen der hakenartigen Enden durch die Nuten und zum Einführen der Verbindungsmittel in die Nuten eine von Hand oder irgendwie mechanisch durchzuführende Drehausrichtung notwendig ist.

Durch die nachveröffentlichte Druckschrift DE 198 23 648 A1 ist ein als Polrad dienender hohler Magnetkörper bekannt, der im Bereich eines Endes geschlitzt ausgebildet ist und um das geschlitzte Ende herum einen ringförmigen Hilfskörper hat, der nach Art einer Bandage wirkt und hierfür aus Metall besteht. Dieser ringförmige Hilfskörper übernimmt das Andrücken des geschlitzten Endes an eine Welle. Anschließend an das geschlitzte Ende umgibt der hohle Magnetkörper die Welle mit Radialspiel. Dort ist längs des Radialspiels der hohle Magnetkörper im ruhenden Zustand frei von Druckspannungen und von Zugspannungen, so daß nur durch Fliehkräfte bewirkte Spannungen auf den Werkstoff des hohlen Magnetkörpers einwirken.

Die Druckschrift JP08237915 offenbart ein Magnet welches radial mit einem Haltekörper verbunden ist.

### Vorteile der Erfindung

Die kennzeichnenden Merkmale des Anspruchs 1 ergeben den Vorteil, daß auf einfache Art und Weise ein ohnehin notwendiger Spritzformvorgang für den hohlen Magnetkörper innerhalb einer Spritzform gleichzeitig die formschlüssige Vereinigung mit dem bereits hergestellten und in die Spritzform eingeführten Halteteil bewirkt. Dadurch liegt der Magnetkörper großflächig und spielfrei an dem Halteteil an. Dabei bildet das Halteteil eine Art Nabe für den hohlen Magnetkörper. Das Anspritzen des hohlen Magnetkörpers an das Halteteil erspart das Ausbilden der Verbindungsmittel in Form von federnden Zungen und vereinfacht dieserart die Auswahl des Werkstoffes, aus dem das Halteteil hergestellt wird.

Durch die in den weiteren Patentansprüchen aufgeführten Maßnahmen sind vorteilhafte Weiterbildungen und Verbesserungen des im Patentanspruch 1 angegebenen Polrades möglich.

Die kennzeichnenden Merkmale des Anspruches 2 ergeben den Vorteil, daß die per Spritzvorgang erzeugten Verbindungsmittel teilweise sichtbar sind und durch Sichtprüfung kontrollierbar ist, ob mittels des Spritzvorgangs ein ausreichender Formschluß zwischen den Verbindungsmitteln und dem Halteteil erreicht wurde.

Die kennzeichnenden Merkmale des Anspruches 3 erlauben es, Spritzformkerne für das zum Herstellen des Halteteils bestimmte Spritzwerkzeug herzustellen unter Rückgriff auf Fertigungseinrichtungen und Fertigungsmittel für in üblicher Weise ausgebildete Aushebeschrägungen thermoplastischer Bauteile. Dies erlaubt eine preisgünstige Herstellung der Spritzform für das Halteteil.

Die kennzeichnenden Merkmale des Anspruch 4 ergeben durch zusätzliche Aushebeschrägungen verbesserten Formschluß.

Die kennzeichnenden Merkmale des Anspruches 5 geben eine Ausgestaltung des Haltekörpers an zu dem Zweck, daß an der fertigen Kombination des Haltekörpers mit dem hohlen Magnetkörper ein Spritzbutzen übrig bleibt, der in zuverlässiger Weise innerhalb der äußeren Kontur des Polrades abbrechbar ist und somit kein störender Überstand über das Polrad hinaus vorhanden sein wird.

Die kennzeichnenden Merkmale des Anspruches 6 ergeben den Vorteil, daß ein ausgewuchtetes Polrad entsteht unter Verwendung von zwei Spritzdüsen für den Werkstoff des Magnetkörpers, wobei der Bund mit seinen zwei Ausrichtflächen dasjenige Hilfsmittel ist, mittels dem die Vertiefungen im Halteteil in die Ausrichtungen relativ zu den Spritzdüsen bringbar sind. Der Bund mit den zwei parallelen Ausrichtflächen, die nach Art von Schlüsselflächen von Schrauben nutzbar sind, ergibt aber auch den weiteren Vorteil einer zusätzlichen Drehmitnahme beim Antreiben des Magnetkörpers mittels des Halteteils. Der Bund hat aber auch des weiteren den Vorteil, daß er die mittels der formschlüssig eingelagerten Verbindungsmittel bewirkte radiale Sicherung des hohlen Magnetkörpers relativ zu dem Halteteil unterstützt.

### Zeichnung

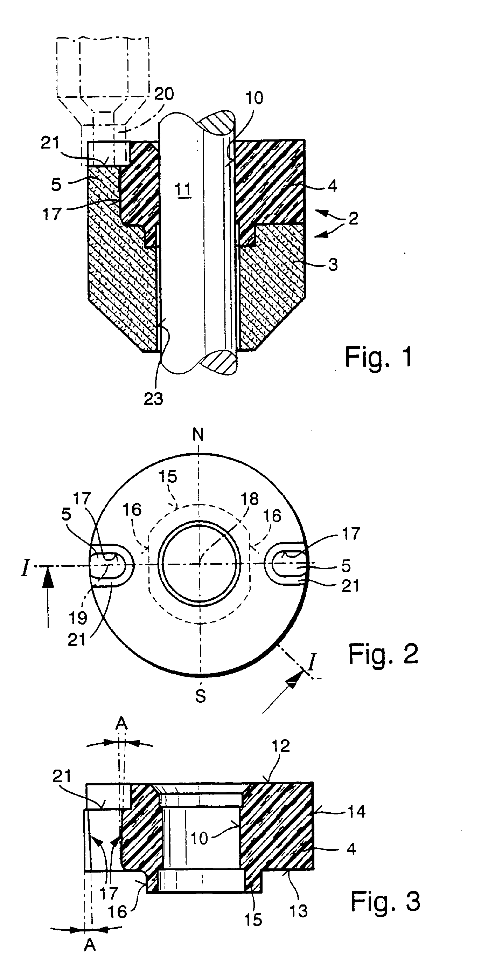

Ein Ausführungsbeispiel des erfindungsgemäßen Polrades ist in der Zeichnung dargestellt und nachfolgend näher beschrieben. Es zeigen Figur 1 das erfindungsgemäße Polrad im Längsschnitt und dabei in Kombination mit einer Welle, Figur 2 eine Stirnansicht des erfindungsgemäßen Polrades gemäß der Figur 1 und Figur 3 ein Bauteil des erfindungsgemäßen Polrades im Längsschnitt.

### Beschreibung des Ausführungsbeispiels

Das erfindungsgemäße Polrad 2 gemäß der Figur 1 besteht aus einem ersten Bauteil 3, einem zweiten Bauteil 4 und beispielsweise zwei Verbindungsmitteln 5. Das erste Bauteil 3 ist ein hohler Magnetkörper, der einstückig mit den Verbindungsmitteln 5 aus einem Werkstoff wie Permanentmagnetpulver mit thermoplastischer Bindung spritzgeformt und dabei mit dem zweiten Bauteil 4 vereinigt wird.

Hierfür ist das zweite Bauteil ein nach Art einer Nabe benütztes Halteteil 4, das einzeln in der Figur 3 im Längsschnitt dargestellt ist. Dieses Halteteil 4 ist um eine Aufnahmeöffnung 10 herum symmetrisch ausgebildet. Die Aufnahmeöffnung 10 ist derart gestaltet, daß sie zusammen mit einer in der Figur 1 dargestellten Welle 11 eine Preßsitzpassung bildet, so daß das erfindungsgemäße, komplette Polrad 2 im Betrieb sowohl in axialer Richtung relativ zur Welle 11 als auch in Umfangsrichtung bei Drehbeschleunigungen und Drehverzögerung einschließlich Erschütterungen ausreichend fest sitzt. Das Halteteil 4 hat eine erste Stirnseite 12 und eine zweite Stirnseite 13 und ist zwischen den beiden Stirnseiten 12 und 13 mit einer beispielsweise zylindrisch verlaufenden Umfangsfläche 14 ausgebildet. Im Ausführungsbeispiel steht von einer Bezugsebene der zweiten Stirnseite 13 in axialer Richtung ein Bund 15 hervor, der zwei zur Längsachse des Halteteils 4 symmetrisch angebrachte parallele Flächen 16 aufweist. Eine dieser Flächen 16 ist in der Figur 3 erkennbar. Die Zuordnung beider Flächen 16 zueinander und zu dem Bund 15 ist am besten sichtbar in der Figur 2. Die beiden Flächen 16 dienen einem später beschriebenen Drehausrichten des Halteteils 4.

In zur Erfindung gehörender Weise sind beispielsweise achsparallel zu der Aufnahmeöffnung 10 zwei Ausnehmungen 5 angeordnet. Beispielsweise sind diese Ausnehmungen 5 mit nach außen hin teilweise offenen Nutquerschnitten ausgebildet, die Ähnlichkeit mit verschließbaren Ankernuten von Elektromotoren haben. Jedoch haben diese Nuten 5, abweichend von der bei Ankern üblichen Geometrie an der zweiten Stirnseite 13 einen ersten Querschnitt und in der Nähe der ersten Stirnseite 12 einen zweiten Querschnitt, der größer ist als der erste Querschnitt. Die beiden Querschnitte liegen beispielsweise in einem Öffnungswinkel, der doppelt so groß ist als ein üblicher Neigungswinkel von Aushebeschrägungen an thermoplastischen Bauteilen. Man kann aber auch einen größeren Öffnungswinkel wählen. Geht man von den üblichen Neigungswinkeln aus, so ist der in der Figur 3 an die Ausnehmung 17 gezeichnete Neigungswinkel A etwas übertrieben dargestellt. Erkennbar ist, daß hier für den Konstrukteur einerseits eine freie Entfaltungsmöglichkeit besteht, andererseits aber Überlegungen zwecks billiger Herstellbarkeit eine Rolle spielen können. Um zum erfindungsgemäß gewollten Ergebnis zu kommen, ist es nicht zwingend notwendig, die Ausnehmungen 17 in Form von wenigstens teilweise nach außen offenen Nuten herzustellen. Es ist beispielsweise auch möglich, im Haltekörper 4 und dabei im wesentlichen in dessen Längsrichtung verlaufend diesen durchziehende Öffnungen anzuordnen, wobei diese Öffnung hohlkegelig ausbildbar sind.

Wie dies besonders in der Figur 2 ersichtlich ist, sind die Ausnehmungen 17 auf einer durch eine Längsachse 18 des Haltekörpers 4 gehenden Symmetrieebene 19 angeordnet. Zu dieser Symmetrieebene 19 sind die Flächen 16 rechtwinklig ausgerichtet. Nach der Herstellung beispielsweise aus Polyamid und beispielsweise mit Zusatz von Glasfasern des Halteteils 4 dienen die Flächen 16 dem Ausrichten in einer nicht dargestellten Spritzform, die für die Herstellung des ersten Bauteils 3 bestimmt ist. Die Flächen 16 dienen nämlich dazu, mittels eines nicht dargestellten Einsetz- und Ausrichtwerkzeugs, das an den Flächen 16 angreift, das Halteteil 4 in eine Drehausrichtung hier im Beispiel zu zwei Spritzdüsen 20 zu bringen, von denen eine in der Figur 1 strichpunktiert dargestellt ist und dabei in eine zur Ausnehmung 17 ausgerichtete Vertiefung 21 eintaucht. Wenn das nicht dargestellte Spritzformwerkzeug für den Magnetkörper 3 geschlossen ist, wird mittels der beiden Spritzdüsen 20, von denen nur eine dargestellt ist wegen der Auswahl des Schnittverlaufes gemäß der Figur 2, der Werkstoff, der den Magnetkörper 3 bildet, durch die Ausnehmung 17 hindurch eingespritzt. Dabei legt sich natürlich dieser Werkstoff auch unmittelbar an die zweite Stirnseite 13, den Bund 15 und die beiden Flächen 16 an. Insoweit ist das Einspritzen von Werkstoff für den Magnetkörper 3 gleichzeitig eine bauliche Vereinigung mit dem Halteteil 4. Erkennbar ist, daß Spritzformen des Magnetkörpers 3 zu einer formschlüssigen und dabei spielfreien Vereinigung mit dem Halteteil führt. Dies ist dazu ausnutzbar, daß man dem Magnetkörper 3 eine axiale Öffnung 23 gibt mit einem gegenüber einem Durchmesser der Welle 11 um so viel größeren Durchmesser, daß zwischen der Welle 11 und der axialen Öffnung 23 jedenfalls Radialspiel vorhanden sein wird. Dadurch sind Verklemmungen des Magnetkörpers 3 mit der Welle 11 vermieden und eine Beanspruchung des Werkstoffs des Magnetkörpers 3 wid im wesentlichen durch unvermeidliche Fliehkräfte bei Drehungen der Welle 11 beschränkt sein.

Damit der Magnetkörper 3 seine Aufgabe als Polrad 2 zu erfüllen vermag, wird er magnetisiert, so daß er, wie in der Figur 2 dargestellt, wenigstens einen Nordpol N und einen zugeordneten Südpol S aufweist. Beispielsweise sind der Nordpol und der Südpol außerhalb der hier gewählten beiden Verbindungsmittel 5 vorgesehen, so daß das Erzeugen dieser Pole durch Magnetisieren ungestört erfolgen kann.

## Patentansprüche

1. Polrad
aus einem ersten Bauteil, das als ein hohler Magnetkörper aus Magnetpulver mit thermoplastischer Bindung hergestellt ist, und
aus einem zweiten Bauteil, das ein fest auf der welle sitzendes Halteteil aus thermoplastischem Werkstoff ist, und aus formschlüssigen Verbindungsmitteln zur axialen und verdrehsicheren Halterung des hohlen Magnetkörpers am Halteteil, wobei die formschlüssigen Verbindungsmittel (5) Enden aufweisen, und einstückig mit dem ersten Bauteil (3), das der hohle Magnetkörper ist, ausgebildet sind und das zweite Bauteil (4), das das festsitzende Halteteil ist, Ausnehmungen (17) aufweist, in die hinein die Verbindungsmittel (5) spritzgeformt sind,
**dadurch gekennzeichnet, dass** die Ausnehmungen (17) im Haltekörper (4) als im wesentlichen in dessen Längsrichtung verlaufend, diesen durchziehende Öffnungen ausgebildet sind, und der Haltekörper (4) sich axial an das erste Bauteil (3) anschließt, wobei das erste Bauteil (3) in Umlaufrichtung wenigstens einen Nordpol und einen Südpol aufweist und eine Welle zug- und druckspannungsfrei umgibt.

2. Polrad nach Anspruch 1, **dadurch gekennzeichnet, daß** die Ausnehmungen (17) als zum Umfang des zweiten Bauteils (4) teilweise offene Längsnuten ausgebildet sind.

3. Polrad nach Anspruch 1 oder 2, **dadurch gekennzeichnet, daß** die Ausnehmungen (17) an einer beim Magnetkörper (3) angrenzenden zweiten Stirnseite (13) des zweiten Bauteils (4) einen ersten Querschnitt und im Bereich einer vom hohlen Magnetkörper (3) fernen, ersten Stirnseite (12) einen größeren zweiten Querschnitt aufweisen.

4. Polrad nach Anspruch 3, **dadurch gekennzeichnet, daß** die Öffnungswinkel (2A), in denen die ersten Öffnungsquerschnitte und die zweiten Öffnungsquerschnitte liegen, im wesentlichen doppelt so groß sind wie Neigungswinkel von bekannten Aushebeschrägen an thermoplastischen Bauteilen.

5. Polrad nach Anspruch 1 oder 2, **dadurch gekennzeichnet, daß** in Ausrichtung zu den Ausnehmungen (17) und dabei von einer ersten Stirnseite (12) im zweiten Bauteil (4) Vertiefungen (21) angeordnet sind zum vorübergehenden Eintauchen von Spritzdüsen (20) zum Einspritzen von Werkstoff des Magnetkörpers (3).

6. Polrad nach Anspruch 5, **dadurch gekennzeichnet, daß** in einer durch eine Längsachse (18) des zweiten Bauteils (4) gehenden Symmetrieebene (19) zwei einander gegenüberliegende Ausnehmungen (17) angeordnet sind und daß das zweite Bauteil (4) mit einem in den hohlen Magnetkörper (3) weisenden Bund (15) mit zwei parallelen Flächen (16), die den Bund zwei mal abplatten, versehen ist, wobei die Ausrichtflächen eine vorbestimmte winkelige Ausrichtung zu der Symmetrieebene (19) haben.

## Claims

1. Rotor comprising a first component, which is produced as a hollow magnet body from magnetic powder with thermoplastic binding, and comprising a second component, which is a holding part which is positioned firmly on the shaft and consists of a thermoplastic material, and comprising interlocking connecting means for holding the hollow magnet body on the holding part axially and such that it is secure against rotation, the interlocking connecting means (5) having ends and being designed to be integral with the first component (3), which is the hollow magnet body, and the second component (4), which is the firmly positioned holding part, having cutouts (17), into which the connecting means (5) are injection-moulded, **characterized in that** the cutouts (17) in the holding body (4) are in the form of openings, which extend essentially in the longitudinal direction of said holding body and pass through said holding body, and the holding body (4) axially adjoins the first component (3), the first component (3) having at least one north pole and one south pole in the circumferential direction and surrounding a shaft in a manner free from tensile stress and compressive stress.

2. Rotor according to Claim 1, **characterized in that** the cutouts (17) are in the form of longitudinal grooves which are partially open towards the circumference of the second component (4).

3. Rotor according to Claim 1 or 2, **characterized in that** the cutouts (17) have a first cross section on a second end side (13), which adjoins the magnet body (3), of the second component (4) and a larger, second cross section in the region of a first end side (12), which is remote from the hollow magnet body (3).

4. Rotor according to Claim 3, **characterized in that** the opening angles (2A) at which the first opening cross sections and the second opening cross sections lie are essentially twice as large as angles of inclination of known drafts on thermoplastic components.

5. Rotor according to Claim 1 or 2, **characterized in that** depressions (21) are arranged in alignment with the cutouts (17) and in this case from a first end side (12) in the second component (4) for the purpose of dipping injection nozzles (20) temporarily into them in order to inject material of the magnet body (3).

6. Rotor according to Claim 5, **characterized in that** two mutually opposite cutouts (17) are arranged in a plane of symmetry (19), which passes through a longitudinal axis (18) of the second component (4), and **in that** the second component (4) is provided with a collar (15), which points into the hollow magnet body (3), with two parallel faces (16), which flatten the collar off in two places, the alignment faces having a predetermined angular alignment with respect to the plane of symmetry (19).

## Revendications

1. Roue polaire constituée d'un premier composant qui est un corps magnétique creux en poudre magnétique assemblée par un liant thermoplastique, d'un second composant qui est une pièce de maintien en matériau thermoplastique montée fixe sur l'arbre de la roue, et de moyens de liaison par combinaison de formes pour maintenir fixé axialement et en rotation le corps magnétique creux sur la pièce de maintien, ces moyens de liaison (5) présentant des extrémités et étant monoblocs avec le premier composant (3) qui constitue le corps magnétique creux, tandis que le second composant (4) qui constitue la pièce de maintien montée fixe présente des évidements (17) dans lesquels les moyens de liaison (5) sont moulés par injection,
**caractérisée en ce que**
les évidements (17) dans le corps de maintien (4) sont constitués par des ouvertures disposées essentiellement dans sa direction longitudinale et le traversant, le corps de maintien (4) faisant suite axialement au premier composant (3) qui, en direction périphérique présente au moins un pôle nord et un pôle sud et entoure l'arbre de roue sans tension de contrainte ou de compression.

2. Roue polaire selon la revendication 1,
**caractérisée en ce que**
les évidements (17) sont constitués par des rainures longitudinales partiellement ouvertes sur la périphérie du second composant (4).

3. Roue polaire selon la revendication 1 ou 2,
**caractérisée en ce que**
sur une seconde face frontale (13) du second composant (4) adjacente au corps magnétique (3), les évidements (17) présentent une première section et, dans la zone d'une première face frontale (12) éloignée du corps magnétique creux (13) une seconde section plus grande.

4. Roue polaire selon la revendication 3,
**caractérisée en ce que**
les angles d'ouverture (2A) dans lesquels se trouvent les premières sections d'ouverture et les secondes sections d'ouverture sont sensiblement le double de l'angle d'inclinaison des dépouilles de démoulage connues sur les composants thermoplastiques.

5. Roue polaire selon la revendication 1 ou 2,
**caractérisée en ce qu'**
en direction des évidements (17) et partant d'une face frontale (12), le second composant (4) a des cavités (21) pour l'introduction préalable de buses d'injection (20) servant à injecter la matière du corps magnétique (3).

6. Roue polaire selon la revendication 5,
**caractérisée en ce que**
dans un plan de symétrie (19) passant par l'axe longitudinal (18) du second composant (4), se trouvent deux évidements (17) situés à l'opposé l'un de l'autre, et le second composant (4) présente un collet (15) engagé dans le corps magnétique creux (3) et qui présente deux portées parallèles (16) aplatissant chacune le collet, ces portées d'orientation présentant un angle prédéfini par rapport au plan de symétrie (19).
